# EUROPÄISCHE PATENTSCHRIFT

(11) **EP 0 886 900 B1**
(45) Veröffentlichungstag und Bekanntmachung des Hinweises auf die Patenterteilung: **11.08.1999**
(21) Anmeldenummer: 97904430.2
(22) Anmeldetag: 13.02.1997
(51) Int. Cl.: H02B 1/30, H02B 1/38

(54) **SCHALTSCHRANK MIT EINEM RAHMENGESTELL**
CONTROL BOX WITH A FRAME STRUCTURE
ARMOIRE DE COMMANDE A CADRE

(30) Priorität: 13.03.1996 DE 19609704
(43) Veröffentlichungstag der Anmeldung: 30.12.1998
(73) Patentinhaber: Rittal-Werk Rudolf Loh GmbH & Co. KG, 35745 Herborn (DE)
(72) Erfinder: DIEBEL, Michael, D-35687 Dillenburg (DE); KÜSTER, Frank, D-35767 Breitscheid-Medenbach (DE)
(74) Vertreter: Fleck, Hermann-Josef, Dr.-Ing.
(86) Internationale Anmeldenummer: EP9700659
(87) Internationale Veröffentlichungsnummer: WO9734347

(56) Entgegenhaltungen:
- EP-A- 0 018 330
- DE-U- 1 910 585

## Beschreibung

Die Erfindung betrifft einen Schaltschrank mit einem Rahmengestell, das aus einzelnen Rahmenschenkeln zusammengesetzt oder von an den Seitenwänden abgekanteten und einzelnen Rahmenschenkeln gebildet ist, wobei die offenen, vertikalen Seiten des Rahmengestelles von Seitenwänden und einer Rückwand verschlossen sind, die an den zugekehrten vertikalen Rahmenschenkeln des Rahmengestelles befestigt sind und wobei eine Schranktüre an den beiden vertikalen Rahmenschenkeln der Vorderseite des Rahmengestelles angelenkt und in der Schließstellung festlegbar ist.

Derartige Schaltschränke sind aus der DE 33 44 598 C1 bzw. der DE 37 31 547 A1 bekannt. Der Innenraum des Schaltschrankes ist dabei an allen Seiten von einem Wandelement abgedeckt, das als Rückwand, Seitenwand oder Schranktüre verwendet ist. Dabei ist gerade an den Stoßstellen benachbarter Wandelemente eine Gefahrenstelle, über die gewaltsam Zugang zum Innenraum des Schaltschrankes möglich ist. Bei Schaltschränken, die im Freien aufgestellt werden, sind die Einbauten des Schaltschrankes nicht ausreichend sicher gegen Vandalismus geschützt.

In der DE 295 19 260 U1 ist ein witterungsgeschützter Schaltschrank mit einer abnehmbaren, im Abstand zu den Anschlußflächen des Schaltschrankes gehaltenen Schutzhaube angegeben.

Aus der DE 92 02 819 U1 geht ein Schaltschrank mit doppelten Wänden hervor, die mit Mineralwolle gegeneinander isoliert sind.

Aus DE-U-19 10 585 ist ein Schaltschrank bekannt, bei welchem doppelwandige Türen und Rückwände eingesetzt werden.

Es ist Aufgabe der Erfindung, einen Schaltschrank der eingangs erwähnten Art so auszugestalten, daß der gewaltsame Zugang zu den im Innenraum befindlichen Einbauten wesentlich erschwert ist.

Diese Aufgabe wird nach der Erfindung dadurch gelöst, daß die Rückwand und die beiden Seitenwände von Schutz-Wänden überdeckt sind, die im Abstand zu diesen angeordnet und mit den zugekehrten, vertikalen Rahmenschenkeln des Rahmengestelles verbunden sind, daß die Schranktüre doppelwandig ausgebildet ist, wobei die innere Türwand im Abstand zur äußeren Türwand steht und zu den vertikalen Kanten der äußeren Türwand Aufnahmeräume für Dichtungen, Scharniere und Schließelemente freiläßt und daß die Schutz-Wände der Seitenwände zumindest im Bereich ihrer vertikalen Kanten so abgekantet sind, daß sie die freien Räume zwischen der Schutz-Wand der Rückwand und dem Rahmengestell und die Aufnahmeräume zwischen der äußeren Türwand und dem Rahmengestell und damit deren Befestigungsstellen abdecken.

Im Bereich der vertikalen Seiten des Rahmengestelles wird damit stets eine aus Wandelement und Schutz-Wand gebildete Doppelwandigkeit erreicht, ohne die Teile zu komplizieren und den Montageaufwand des Schaltschrankes zu erschweren. An allen Stoßstellen sind die Befestigungsstellen abgedeckt und nicht zugänglich. Außerdem bieten die Stoßstellen kaum Ansatzmöglichkeiten für Werkzeuge, um die Schutz-Wände gewaltsam vom Rahmengestell zu lösen. Damit ist der Schaltschrank gegen Vandalismus ausreichend gesichert.

Mit dieser Ausgestaltung wird auch ein erhöhter Schutz gegen Regen und Spritzwasser erreicht, da die Dichtungselemente benetzt sind. Außerdem ist durch die Geometrie ein erhöhter HF-Schutz geschaffen.

Um auch die Unterseite und Oberseite des Schaltschrankes in den Schutz einzubeziehen, sieht eine Weiterbildung vor, daß die Unterseite des Rahmengestelles mit einem Sockel verbunden ist und daß auf der Oberseite derselben ein zusätzliches Gehäuse, z.B. für ein Klimagerät befestigt ist, das ebenfalls doppelwandig ausgelegt sein kann.

Die Anbringung der Schutz-Wand im Bereich der Rückwand ist nach einer Ausgestaltung so gelöst, daß die Schutz-Wand für die Rückwand im Bereich ihrer abgekanteten, vertikalen Seiten auf ihrer Innenseite angebrachte Verbindungsbolzen trägt, die mit einer Profilseite der zugekehrten vertikalen Rahmenschenkel des Rahmengestelles verschraubt sind, während für die Rückwand-Befestigung selbst vorgesehen ist, daß die Rückwand L-förmig abgekantete Ränder aufweist, deren Endabschnitte über Dichtungen an Dichtungsstegen der zugekehrten Rahmenschenkel anliegen und daß die L-förmigen Ränder Bohrungen für die Verbindungsbolzen der zugeordneten Schutz-Wand aufweisen und mit dieser am Rahmengestell gehalten sind.

Um den freien Raum zwischen der der Rückwand zugeordneten Schutz-Wand und dem Rahmengestell möglichst klein zu halten, sieht eine Ausgestaltung vor, daß die Schutz-Wand für die Rückwand einen umlaufenden, rechtwinklig eingebogenen Rand aufweist, der den L-förmigen Rand der Rückwand und die Dichtungsstege der Rahmenschenkel zumindest teilweise überdeckt.

Ist nach einer Ausgestaltung vorgesehen, daß sich die Verbindungsbolzen mit ihren mit Gewindeaufnahme versehenen Enden an Profilseiten der zugekehrten, vertikalen Rahmenschenkel des Rahmengestelles abstützen, die parallel zu der Rückwand ausgerichtet sind, und daß die für die Befestigung vorgesehenen Befestigungsschrauben durch Bohrungen dieser Profilseiten eingeführt und in die Gewindeaufnahmen der Verbindungsbolzen eingeschraubt sind, dann kann die Rückwand zusammen mit ihrer zugeordneten Schutz-Wand am Rahmengestell befestigt werden.

Ist der Rahmenschenkel als offener oder geschlossener Hohlprofilabschnitt ausgebildet, dann ist vorgesehen, daß parallel zu diesen Profilseiten ausgerichtete, beabstandete Profilseiten der Rahmenschenkel mit fluchtenden Durchbrüchen versehen sind, um die Befestigungsschrauben durch diese Durchbrüche hindurch in die Bohrungen der der Rückwand zugekehrten Profilseiten der Rahmenschenkel einzuführen.

Die Anbringung der Schutz-Wände für die Seitenwände ist so gelöst, daß die an den vertikalen Kanten der Schutz-Wände für die Seitenwände vorgesehenen Abkantungen mit Profilseiten der zugekehrten Rahmenschenkel verbunden sind. Die Profilseiten der Rahmenschenkel stehen dabei senkrecht zu den Schutz-Wänden.

Eine Abdeckung der Befestigungsstellen wird dabei auf einfache Weise dadurch erreicht, daß die Endabschnitte der Schutz-Wände für die Seitenwände in die freien Räume zwischen der Schutz-Wand für die Rückwand und das Rahmengestell und in die Aufnahmeräume zwischen der äußeren Türwand und dem Rahmengestell eingeführt sind.

Die doppelwandige Ausbildung der Schranktüre wird nach der Erfindung dadurch erreicht, daß sich die innere Türwand mit einem abgekanteten Rand auf der Innenseite der äußeren Türwand abstützt und mit dieser verbunden, z.B. verschweißt ist oder daß die innere Türwand doppelt abgekantet und mit dem Endabschnitt mit der Innenseite der äußeren Türwand verbunden ist und daß sich die Endabschnitte bis zu den Rändern der äußeren Türwand erstrecken. In beiden Fällen entsteht bis zum Rand der äußeren Türwand im Bereich der vertikalen Seiten jeweils ein Aufnahmeraum, in dem die Elemente zum Anlenken, Verschließen und Abdichten der Schranktüre in der Schließstellung, wie Dichtungen, Scharniere, Schließelemente und dgl., untergebracht werden können.

Eine wesentliche Vereinfachung im Aufbau des Schaltschrankes ergibt sich dadurch, daß die Rückwand und die zugeordnete Schutz-Wand eine Einheit bilden, die identisch aufgebaut ist wie die aus innerer und äußerer Türwand bestehende doppelwandige Schranktüre.

Ist nach einer weiteren Ausgestaltung vorgesehen, daß die Schutz-Wände und die äußere Türwand mit zusätzlichen einer Oberflächen-Schutzschicht versehen sind, während das Rahmengestell die Rückwand, die Seitenwand und die innere Türwand mit elektrisch leitender Oberfläche, d.h. ohne zusätzliche Oberflächen-Schutzschicht, ausgelegt sind, dann können der durch die Seitenwände, die Rückwandund die innere Türwand gebildete "Innenschrank" und der durch die Schutz-Wände und die äußere Türwand gebildete "Außenschrank" in ihrer Oberflächengestaltung optimal an die Einsatzbedingungen, wie z.B. Schutz gegen Umwelteinflüsse und optisches Aussehen, angepaßt werden.

Die Erfindung wird anhand von in den Zeichnungen dargestellten Ausführungsbeispielen näher erläutert. Es zeigt:
- Fig. 1: einen schematischen horizontalen Querschnitt durch einen "doppelwandigen" Schaltschrank,
- Fig. 2: einen vergrößerten Teilquerschnitt im Bereich der vertikalen Stoßstelle zwischen der Rückseite und einer Seite des Schaltschrankes, wobei die vertikalen Rahmenschenkel an der Seitenwand abgekantet sind,
- Fig. 3: einen vergrößerten Teilquerschnitt im Bereich der vertikalen Stoßstelle zwischen der Scharnierseite der Schranktüre und einer Seitenwand, wobei die vertikalen Rahmenschenkel von der Seitenwand getrennt sind, und
- Fig. 4: einen vergrößerten Teilquerschnitt im Bereich der vertikalen Stoßstelle zwischen der Scharnierseite der Schranktüre und einer Seitenwand, wobei die vertikalen Rahmenschenkel an der Seitenwand abgekantet sind.

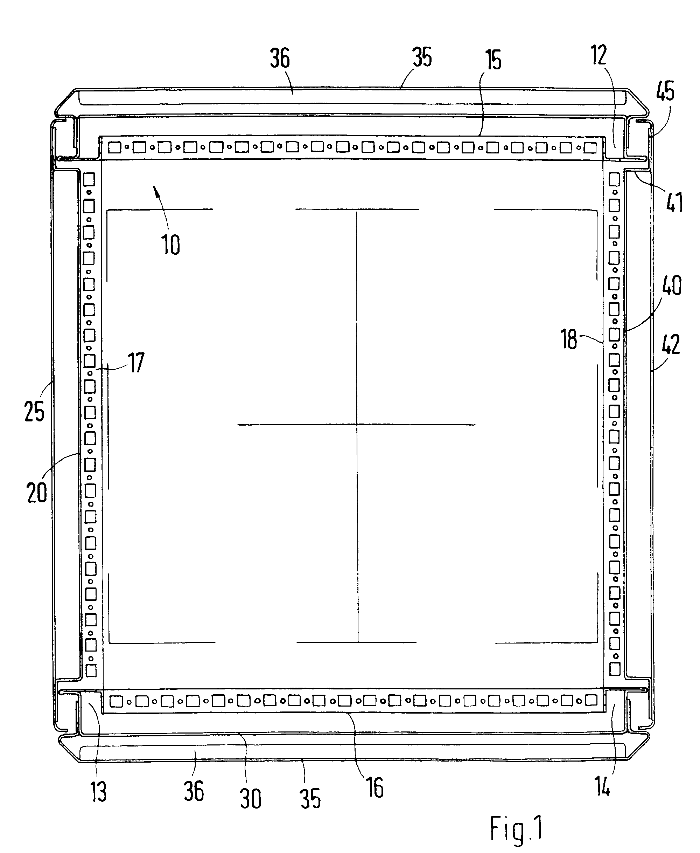

Der horizontale schematische Querschnitt durch einen Schaltschrank nach Fig. 1 läßt erkennen, daß alle vertikalen Seiten des Schaltschrankes doppelwandig ausgebildet sind. Dabei bilden die Rückwand 20, die beiden Seitenwände 30 und die innere Türwand 40 einen "Innenschrank" und die der Rückwand 20 zugeordnete Schutz-Wand 25 mit den Schutz-Wänden 35 der Seitenwände 30 und die äußere Türwand 42 einen "Außenschrank", die in ihrer Oberflächengestaltung unabhängig voneinander gestaltet und optimal an den Einsatzfall des Schaltschrankes angepaßt werden können.

Wie der Schnitt nach Fig. 1 erkennen läßt, sind die vertikalen Rahmenschenkel 11,12,13 und 14 des Rahmengestelles 10 an den Seitenwänden 30 abgekantet, wie im Einzelnen noch gezeigt wird. Die horizontalen Rahmenschenkel 15,16,17 und 18, z.B. im Bereich der Unterseite des Schaltschrankes können einzelne, getrennte Rahmenschenkel sein und das Rahmengestell 10 vervollständigen. Das Rahmengestell 10 kann auch aus lauter einzelnen Rahmenschenkeln zusammengesetzt sein.

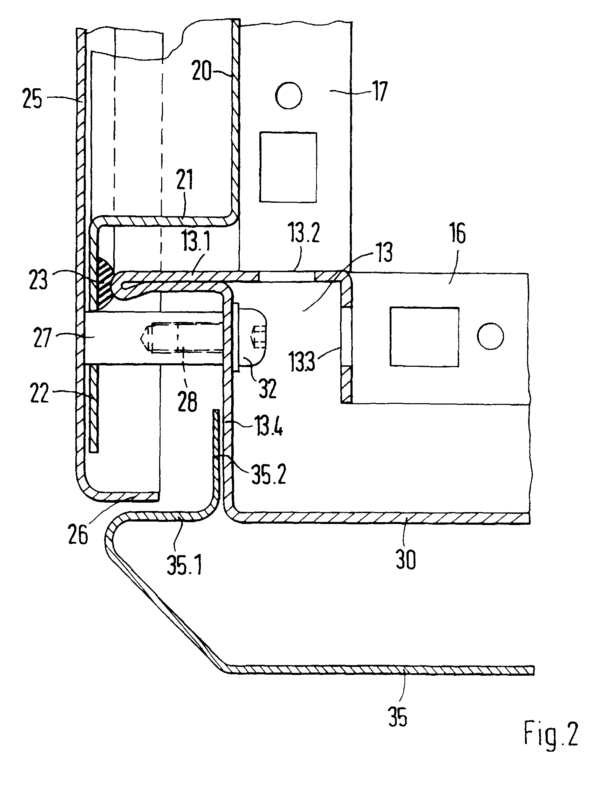

Anhand des Teilschnittes nach Fig. 2 wird die Ausbildung der vertikalen Stoßstelle zwischen der Rückwand 20 und einer Seitenwand 30 mit abgekantetem Rahmenschenkel 13 in Einzelheiten gezeigt und näher erläutert.

Die abgekanteten Abschnitte 13.4 und 13.1 bilden mit dem mit Durchbrüchen 13.3 versehenen Endabschnitt einen als offener Hohlprofilabschnitt ausgebildeten Rahmenschenkel 13. Die Rückwand 20 liegt am Rahmengestell an, wie der Rahmenschenkel 13 erkennen läßt. An den vertikalen Seiten ist die Rückwand 20 L-förmig abgekantet, wie mit 21 und 22 gekennzeichnet ist. Der Endabschnitt 22 der Abkantung 21 liegt über die Dichtung 23 an dem doppellagigen Dichtungssteg 13.1 des Rahmenschenkels 13 an. In die Profilseite 13.4 des Rahmenschenkels 13 sind Bohrungen für Befestigungsschrauben 32 eingebracht. Die Schutz-Wand 25 für die Rückwand 20 ist mit einem umlaufenden, nach innen abgekanteten Rand 26 versehen und trägt auf ihrer Innenseite Verbindungsbolzen 27 mit Gewindeaufnahmen 28. Die Schutz-Wand 25 wird über diese Verbindungsbolzen 27 und die Befestigungsschrauben 32 an der Profilseite 13.4 des Rahmenschenkels 13 festgeschraubt. Hat die Rückwand 20 im Endabschnitt 22 Bohrungen für die Verbindungsbolzen 27, dann kann die Rückwand 20 mit der Schutz-Wand 25 am Rahmengestell 10 befestigt werden. Damit die Befestigungsschrauben 32 in die Bohrungen der Profilseite 13.4 eingeführt werden können, sind in den Endabschnitt des Rahmenschenkels 13 Durchbrüche 13.3 eingebracht, welche mit den Bohrungen in der Profilseite 13.4 fluchten. Die Auslegung von Rückwand 20 mit Abkantung 21 und 22 sowie der Verbindungsbolzen 27 ist dabei so, daß die auf den Verbindungsbolzen 27 gehaltene Rückwand 20 über die Dichtung 23 gegen Dichtungssteg 13.1 des Rahmenschenkels 13 gedrückt und abgedichtet wird.

Der Rand 26 der Schutz-Wand 25 erstreckt sich teilweise über den Dichtungssteg 13.1 und die Verbindungsbolzen 27, so daß zwischen dem Rand 26 der Schutz-Wand 25 und dem Rahmengestell 10, d.h. der Profilseite 13.4 derselben, nur ein schmaler Freiraum entsteht, in den die abgekanteten Endabschnitte 35.2 der Schutz-Wand 35 der Seitenwand 30 eingeführt und ebenfalls mit dem Rahmenschenkel 13 verbunden werden. Dabei deckt der Übergangsabschnitt 35.1 den Freiraum zwischen dem Rand 26 der Schutz-Wand 25 und dem Rahmengestell 10 mit seiner Profilseite 13.4 ab. Die Befestigungsstellen mit den Befestigungsschrauben 32 sind damit abgedeckt und über die Stoßstelle nicht zugänglich. Die Verbindung der anderen vertikalen Seite von Rückwand 20 und Schutz-Wand 25 am Rahmenschenkel 11 ist identisch ausgebildet und auch die Anbringung und Ausbildung der anschließenden Seitenwand 30 und Schutz-Wand 35 unterscheidet sich nicht von der in Fig. 2 gezeigten Weise.

Der Endabschnitt 35.2 der Schutz-Wand 35 kann sich weiter nach innen erstrecken, so daß er auch mit der Befestigungsschraube 32 an der Profilseite 13.4 des Rahmenschenkels 13 befestigt werden kann.

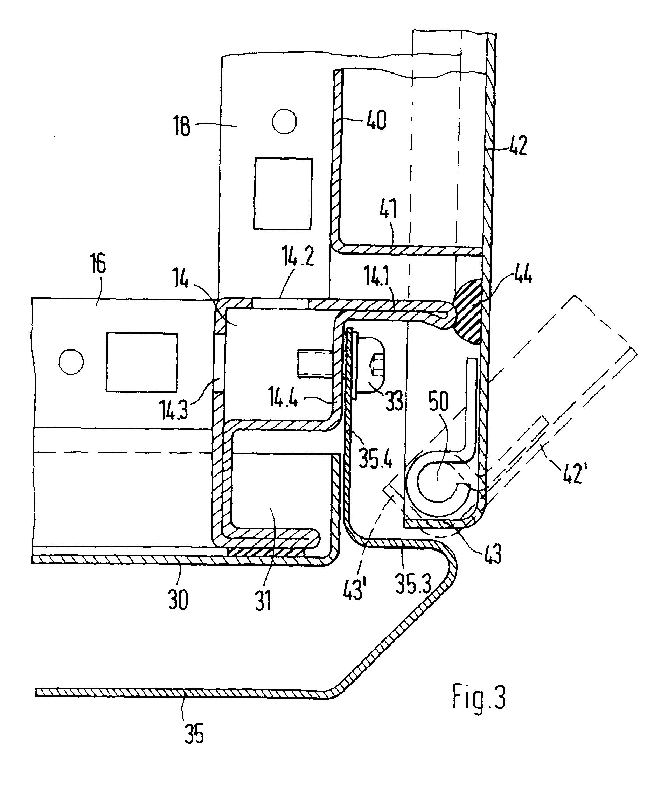

Anhand der Fig. 3 wird die vertikale Stoßstelle zwischen einer Seitenwand 30 mit Schutz-Wand 35 und der doppelwandigen Schranktüre gezeigt und erläutert. Dabei ist das Rahmengestell 10 aus getrennten Rahmenschenkeln gebildet, wie mit dem vertikalen Rahmenschenkel 14 gezeigt ist. Die Seitenwand 30 kann dabei mit einem umlaufenden Rand 31 versehen sein und über Dichtungen an Anlagestegen der Rahmenschenkel 13 und 14 des Rahmengestelles 10 anliegen. Der Endabschnitt 35.4 der Schutz-Wand 35 ist mit der Befestigungsschraube 33 an der Profilseite 14.4 des Rahmenschenkels 14 befestigt. Die Durchbrüche 14.3 und 14.2 sind für die Befestigung von Einbauten vorgesehen. Der Abschnitt 35.3 der Schutz-Wand 35 überdeckt den Aufnahmeraum der Schranktüre. Die Schranktüre weist eine innere Türwand 40 und eine äußere Türwand 42 auf. Beide stehen im Abstand parallel zueinander und können auch wie die Rückwand 20 und ihre Schutz-Wand 35 eine Einheit bilden. Die innere Türwand 40 stützt sich mit dem abgekanteten Rand 41 direkt auf der Innenseite der äußeren Türwand 42 ab und ist mit dieser verbunden.

Wie schon in Fig. 1 gezeigt ist, kann die Abkantung der inneren Türwand 40 auch L-förmig sein, wobei ein Endabschnitt 45 auf der Innenseite der äußeren Türwand 42 aufliegt und mit dieser verbunden ist. Der Endabschnitt 45 erstreckt sich dann bis zum abgekanteten Rand 43 der äußeren Türwand 42. Im Anschluß an den Rand 43 ist auf der Innenseite auch ein Scharnierteil 50 befestigt, das über einen nicht dargestellten Scharnierbolzen mit einem am Rahmenschenkel 14 befestigten zweiten Scharnierteil gelenkig verbunden ist. In dem durch den Rand 41 abgeteilten Aufnahmeraum ist auf der Innenseite der Schranktüre eine Dichtung 44 aufgebracht, die mit den Dichtungsteg 14.1 die Schranktüre in der Schließstellung dicht abschließt.

Die angelenkte Schranktüre reicht bis zum Abschnitt 35.3 der Schutz-Wand 35 heran, so daß nicht nur die Befestigungsstellen mit den Befestigungsschrauben 33, sondern auch die Scharniere abgedeckt und nicht zugänglich sind. Dasselbe gilt auch für die Schließelemente auf der anderen vertikalen Seite der Schranktüre, die in gleicher Weise gestaltet ist und mit der anschließenden Seitenwand 30 mit Schutz-Wand 35 eine gleiche Stoßstelle bildet.

Wie die Fig. 3 weiterhin erkennen läßt, behindert die Schutz-Wand 35 das Öffnen der Schranktüre nicht, wie die mit 42' und 43' angedeutete Stellung der Schranktüre zeigt.

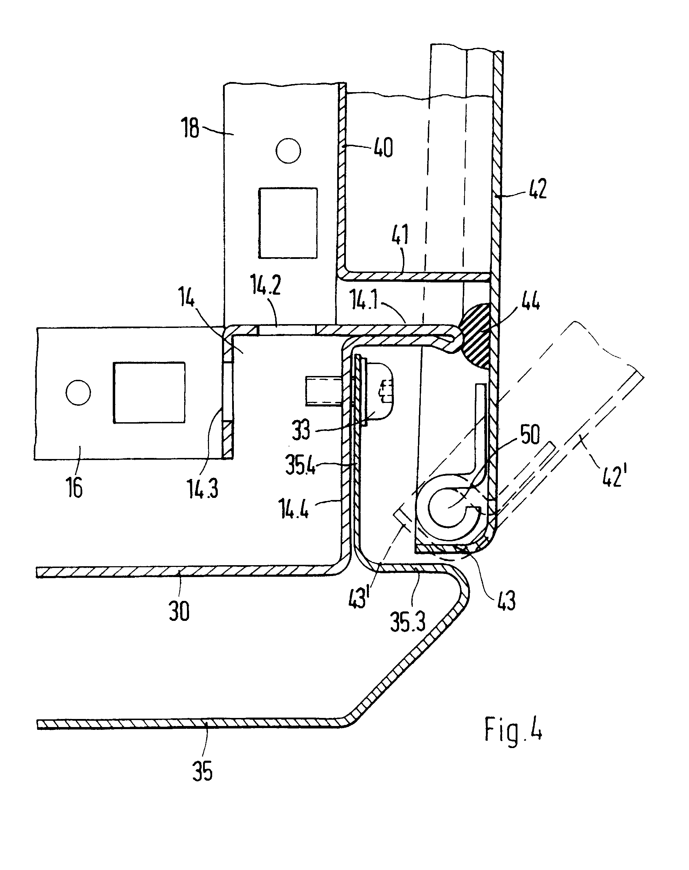

Bei der Ausgestaltung der Stoßstelle zwischen einer Seitenwand 30 mit Schutz-Wand 35 und der doppelwandigen Schranktür nach Fig. 4 ist der vertikale Rahmenschenkel 14 wieder an der Seitenwand 30 abgekantet. Dasselbe gilt dann auch für den Rahmenschenkel 12 auf der Schließseite der Schranktüre. Ansonsten können die Türwände 40 und 42 wie bei Fig. 3 ausgebildet sein.

Die Fig. 2 läßt erkennen, daß auf den vertikalen Rahmenschenkel 13 die horizontalen Rahmenschenkel 16 und 17 stoßen, während auf den vertikalen Rahmenschenkel 14 nach Fig. 3 und 4 die horizontalen Rahmenschenkel 16 und 18 stoßen.

Die beiden Seitenwände 30 können auch über eine Deckwand einstückig miteinander verbunden sein. Die Deckwand kann dabei einen Teil der horizontalen Rahmenschenkel tragen.

Der Schutz der Unterseite des Schaltschrankes kann durch einen Sockel verbessert werden, der dann vorzugsweise vom Innenraum des Schaltschrankes aus mit letzterem verbunden ist.

Auf die Oberseite des Schaltschrankes kann zur Verbesserung der Sicherung ein zusätzliches Gehäuse, z.B. eines Klimagerätes, aufgesetzt sein, das in gleicher Weise doppelwandig ausgebildet sein kann.

## Patentansprüche

1. Schaltschrank mit einem Rahmengestell, das aus einzelnen Rahmenschenkeln (11 bis 18) zusammengesetzt oder von an den Seitenwänden (30) abgekanteten und einzelnen Rahmenschenkeln (11 bis 18) gebildet ist, wobei die offenen, vertikalen Seiten des Rahmengestelles von Seitenwänden (30) und einer Rückwand (20) verschlossen sind, die an den zugekehrten vertikalen Rahmenschenkeln (11-14) des Rahmengestelles befestigt sind und wobei eine Schranktüre an den beiden vertikalen Rahmenschenkeln der Vorderseite des Rahmengestelles angelenkt und in der Schließstellung festlegbar ist,
dadurch gekennzeichnet,
daß die Rückwand (20) und die beiden Seitenwände (30) von Schutz-Wänden (25,35) überdeckt sind, die im Abstand zu diesen angeordnet und mit den zugekehrten, vertikalen Rahmenschenkeln (11,12,13,14) des Rahmengestelles (10) verbunden sind,
daß die Schranktüre doppelwandig ausgebildet ist, wobei die innere Türwand (40) im Abstand zur äußeren Türwand (42) steht und zu den vertikalen Kanten der äußeren Türwand (42) Aufnahmeräume für Dichtungen (44), Scharniere (50) und Schließelemente freiläßt und
daß die Schutz-Wände (35) der Seitenwände (30) zumindest im Bereich ihrer vertikalen Kanten so abgekantet sind, daß sie die freien Räume zwischen der Schutz-Wand (25) der Rückwand (20) und dem Rahmengestell (10) und die Aufnahmeräume zwischen der äußeren Türwand (42) und dem Rahmengestell (10) und damit deren Befestigungsstellen abdecken.

2. Schaltschrank nach Anspruch 1,
dadurch gekennzeichnet,
daß die Schutz-Wand (25) für die Rückwand (20) im Bereich ihrer abgekanteten, vertikalen Seiten auf ihrer Innenseite angebrachte Verbindungsbolzen (27) trägt, die mit einer Profilseite (13.4) der zugekehrten vertikalen Rahmenschenkel (11,13) des Rahmengestelles (10) verschraubt sind.

3. Schaltschrank nach Anspruch 1 oder 2,
dadurch gekennzeichnet,
daß die Rückwand (20) L-förmig abgekantete Ränder (21) aufweist, deren Endabschnitte (22) über Dichtungen (23) an Dichtungsstegen (13.1) der zugekehrten Rahmenschenkel (11,13) anliegen und daß die L-förmigen Ränder (21) Bohrungen für die Verbindungsbolzen (27) der zugeordneten Schutz-Wand (25) aufweisen und mit dieser am Rahmengestell (10) gehalten sind.

4. Schaltschrank nach Anspruch 2 oder 3,
dadurch gekennzeichnet,
daß die Schutz-Wand (25) für die Rückwand (20) einen umlaufenden, rechtwinklig eingebogenen Rand (26) aufweist, der den L-förmigen Rand (21) der Rückwand (20) und die Dichtungsstege (13.1) der Rahmenschenkel (11,13) zumindest teilweise überdeckt.

5. Schaltschrank nach einem der Ansprüche 2 bis 4,
dadurch gekennzeichnet,
daß sich die Verbindungsbolzen (27) mit ihren mit Gewindeaufnahme (28) versehenen Enden an Profilseiten (13.4) der zugekehrten, vertikalen Rahmenschenkel (11,13) des Rahmengestelles (10) abstützen, die parallel zu der Rückwand (20) ausgerichtet sind, und
daß die für die Befestigung vorgesehenen Befestigungsschrauben (32) durch Bohrungen dieser Profilseiten (13.4) eingeführt und in die Gewindeaufnahmen (28) der Verbindungsbolzen (27) eingeschraubt sind.

6. Schaltschrank nach Anspruch 5,
dadurch gekennzeichnet,
daß parallel zu diesen Profilseiten (13.4) ausgerichtete, beabstandete Profilseiten der Rahmenschenkel (11,13) mit fluchtenden Durchbrüchen (13.3) versehen sind.

7. Schaltschrank nach einem der Ansprüche 1 bis 6,
dadurch gekennzeichnet,
daß die an den vertikalen Kanten der Schutz-Wände (35) für die Seitenwände (30) vorgesehenen Abkantungen (35.3; 35.4) mit Profilseiten (13.4; 14.4) der zugekehrten Rahmenschenkel (11, 12 bzw. 13, 14) verbunden sind.

8. Schaltschrank nach Anspruch 7,
dadurch gekennzeichnet,
daß die Profilseiten (13.4; 14.4) senkrecht zu den Seitenwänden (30) und den zugeordneten Schutz-Wänden (35) ausgerichtet sind.

9. Schaltschrank nach Anspruch 7 oder 8,
dadurch gekennzeichnet,
daß die Endabschnitte (35.4) der Schutz-Wände (35) für die Seitenwände (30) in die freien Räume zwischen der Schutz-Wand (25) für die Rückwand (20) und das Rahmengestell (10) und in die Aufnahmeräume zwischen der äußeren Türwand (42) und dem Rahmengestell (10) eingeführt sind.

10. Schaltschrank nach einem der Ansprüche 1 bis 9,
dadurch gekennzeichnet,
daß sich die innere Türwand (40) mit einem abgekanteten Rand (41) auf der Innenseite der äußeren Türwand (42) abstützt und mit dieser verbunden, z.B. verschweißt ist.

11. Schaltschrank nach einem der Ansprüche 1 bis 9,
dadurch gekennzeichnet,
daß die innere Türwand (40) doppelt abgekantet und mit dem Endabschnitt (45) mit der Innenseite der äußeren Türwand (42) verbunden ist und daß sich die Endabschnitte (45) bis zu den Rändern (43) der äußeren Türwand (42) erstrecken.

12. Schaltschrank nach einem der Ansprüche 1 bis 11,
dadurch gekennzeichnet,
daß die Rückwand (20) und die zugeordnete Schutz-Wand (25) eine Einheit bilden, die identisch aufgebaut ist wie die aus innerer und äußerer Türwand (40,42) bestehende, doppelwandige Schranktüre.

13. Schaltschrank nach einem der Ansprüche 1 bis 12,
dadurch gekennzeichnet,
daß die Schutz-Wände (25,35) und die äußere Türwand (42) mit einer zusätzlichen Oberflächen-Schutzschicht versehen sind, während das Rahmengestell (10) die Rückwand (20), die Seitenwand (30) und die innere Türwand (40) mit elektrisch leitender Oberfläche, d.h. ohne zusätzliche Oberflächen-Schutzschicht, ausgelegt sind.

14. Schaltschrank nach einem der Ansprüche 1 bis 13,
dadurch gekennzeichnet,
daß die Unterseite des Rahmengestelles (10) mit einem Sockel verbunden ist.

15. Schaltschrank nach einem der Ansprüche 1 bis 14,
dadurch gekennzeichnet,
daß auf der Oberseite desselben ein zusätzliches Gehäuse, z.B. für ein Klimagerät befestigt ist, das ebenfalls doppelwandig ausgelegt sein kann.

## Claims

1. Switchgear cabinet with a framework which is composed of individual frame members (11 to 18) or formed from frame members (11 to 18) bent over on the side walls (30) and individual ones, the open, vertical sides of the framework being closed by side walls (30) and a rear wall (20), which are attached to the facing vertical frame members (11-14) of the framework, and a cabinet door being hinged to the two vertical frame members of the front side of the framework and able to be fixed in the locking position,
**characterised in that**
the rear wall (20) and the two side walls (30) are covered by protective walls (25, 35) which are disposed at a spacing from the latter and are connected to the facing vertical frame members (11,12,13,14) of the framework (10),
in that the cabinet door is configured double-walled, the inner door wall (40) standing at a spacing from the outer door wall (42) and leaving free towards the vertical edges of the outer wall (42) receiving spaces for seals (44), hinges (50) and locking members and
in that the protective walls (35) of the side walls (30) are, at least in the region of their vertical edges, so bent over that they cover the free spaces between the protective wall (25) of the rear wall (20) and the framework (10) and the receiving spaces between the outer door wall (42) and the framework (10) and thus cover their attachment points.

2. Switchgear cabinet according to claim 1,
**characterised in that**
the protective wall (25) for the rear wall (20) carries, in the region of its bent-over vertical sides and attached to its inner side, connecting pins (27) which are screwed to a profile side (13.4) of the opposite vertical frame members (11,13) of the framework (10).

3. Switchgear cabinet according to claim 1 or 2,
**characterised in that**
the rear wall (20) has L-shaped bent-over borders (21), whose end portions (22) abut via seals (23) against sealing webs (13.1) of the facing frame members (11,13) and
in that the L-shaped borders (21) have bores for the connecting pins (27) of the associated protective wall (25) and are held with the latter on the framework (10).

4. Switchgear cabinet according to claim 2 or 3,
**characterised in that**
the protective wall (25) for the rear wall (20) has a peripheral border (26), bent inwardly at right angles and which covers the L-shaped border (21) of the rear wall (20) and the sealing webs (13.1) of the frame members (11,13) at least partially.

5. Switchgear cabinet according to one of claims 2 to 4,
**characterised in that** the connecting pins (27) are supported with their ends, each provided with a threaded receiving means (28), on profile sides (13.4) of the opposite vertical frame members (11,13) of the framework (10), which are aligned parallel to the rear wall (20), and
in that the fastening screws (32) provided for fastening are inserted through bores in these profile sides (13.4) and screwed into the threaded receiving means (28) of the connecting pins (27).

6. Switchgear cabinet according to claim 5,
**characterised in that**
profile sides of the frame members (11,13), at a spacing from and parallel to these profile sides (13.4), are provided with openings (13.3) in alignment.

7. Switchgear cabinet according to one of claims 1 to 6,
**characterised in that**
the bent-over portions (35.3; 35.4) provided on the vertical edges of the protective walls (35) for the side walls (30) are connected to profile sides (13.4; 14.4) of the facing frame members (11,12 or 13,14).

8. Switchgear cabinet according to claim 7,
**characterised in that**
the profile sides (13.4; 14.4) are aligned perpendicular to the side walls (30) and the associated protective walls (35).

9. Switchgear cabinet according to claim 7 or 8,
**characterised in that**
the end portions (35.4) of the protective walls (35) for the side walls (30) are inserted into the free spaces between the protective wall (25) for the rear wall (20) and the framework (10) and into the receiving spaces between the outer door wall (42) and the framework (10).

10. Switchgear cabinet according to one of claims 1 to 9,
**characterised in that**
the inner door wall (40) is supported with one bent-over border (41) on the inner side of the outer door wall (42) and is connected, e.g. welded, thereto.

11. Switchgear cabinet according to one of claims 1 to 9,
**characterised in that**
the inner door wall (40) is doubly bent-over and connected with its end portion (45) to the inner side of the outer door wall (42) and in that the end portions (45) extend as far as the borders (43) of the outer door wall (42).

12. Switchgear cabinet according to one of claims 1 to 11,
**characterised in that**
the rear wall (20) and the associated protective wall (25) form a unit which is constructed identically to the double-walled cabinet door comprising inner and outer door walls (40,42).

13. Switchgear cabinet according to one of claims 1 to 12,
**characterised in that**
the protective walls (25, 35) and the outer door wall (42) are provided with an additional surface-protective layer, whilst the framework (10), the rear wall (20), the side wall (30) and the inner door wall (40) are designed with an electrically conductive surface, i.e. without an additional surface-protective layer.

14. Switchgear cabinet according to one of claims 1 to 13,
**characterised in that**
the underside of the framework (10) is connected to a base.

15. Switchgear cabinet according to one of claims 1 to 14,
**characterised in that,**
on the upper side of same, an additional housing, e.g. for an air conditioning appliance, is fastened and can likewise be designed double-walled.

## Revendications

1. Armoire de distribution avec une ossature d'encadrement composée de branches d'encadrement (11 à 18) individuelles ou constituée par des branches d'encadrement (11 à 18) individuelles coudées sur les parois latérales, où les côtés verticaux ouverts de l'ossature d'encadrement sont fermés par des parois latérales (30) et par une paroi arrière (20), parois qui sont fixées aux branches d'encadrement verticales (11 à 14) correspondantes de l'ossature d'encadrement et où une porte d'armoire est articulée sur les deux branches d'encadrement verticales de la face avant de l'ossature d'encadrement, cette porte pouvant être bloquée dans la position de fermeture,
caractérisée
en ce que la paroi arrière (20) et les deux parois latérales (30) sont recouvertes par des parois de protection (25, 36), qui sont disposées à distance desdites parois et qui sont reliées aux branches d'encadrement verticales (11, 12, 13, 14) correspondantes de l'ossature d'encadrement (10),
en ce que la porte d'armoire est à double paroi, où la paroi de porte intérieure (40) est disposée à distance de la porte d'armoire extérieure (42) et ménage par rapport aux arêtes verticales de la porte d'armoire extérieure (42) des espaces de réception pour des joints (44), pour des charnières (50) et pour des éléments de fermeture, et
en ce que les parois de protection (35) des parois latérales (30) sont au moins dans la région de leurs arêtes verticales coudées de manière telle qu'elles recouvrent les espaces libres entre la paroi de protection (25) de la paroi arrière (20) et l'ossature d'encadrement (10) ainsi que les espaces de réception entre la paroi de porte extérieure (42) et l'ossature d'encadrement (10) et dès lors recouvrent aussi leurs points de fixation.

2. Armoire de distribution suivant la revendication 1, caractérisée
en ce que dans la région de ses côtés verticaux, la paroi de protection (25) pour la paroi arrière (20) porte des boulons de liaison (27) fixés à sa face intérieure, boulons qui sont vissés dans une aile de profilé (13.4) de la branche d'encadrement verticale (11, 13) correspondante de l'ossature d'encadrement (10).

3. Armoire de distribution suivant la revendication 1 ou la revendication 2,
caractérisée
en ce que la paroi arrière (20) présente des bords (21) coudés en forme de L, dont les tronçons terminaux (22) sont par l'intermédiaire de joints (23) à des nervures d'étanchéité (13.1) des branches d'encadrement (11, 13) correspondantes, et
en ce que les bords (21) en forme de L présentent des forures pour les boulons de liaison (27) de la paroi de protection associée (25) et sont avec cette dernière fixés à l'ossature d'encadrement (10).

4. Armoire de distribution suivant la revendication 2 ou la revendication 3,
caractérisée
en ce que la paroi de protection (25) pour la paroi arrière (20) présente un bord périphérique cintré à angle droit (26), qui recouvre au moins partiellement le bord en forme de L (21) de la paroi arrière (20) et les nervures d'étanchéité (13.1) des branches d'encadrement (11, 13).

5. Armoire de distribution suivant l'une quelconque des revendications de 2 à 4,
caractérisée
en ce que les boulons de liaison (27) s'appuient par leurs extrémités à logement fileté (28) sur des ailes de profilé (13.4) des branches d'encadrement verticales (11, 13) correspondantes de l'ossature d'encadrement (10), branches qui sont orientées parallèlement à la paroi arrière (20), et en ce que les vis de fixation (32) prévues pour la fixation sont introduites au travers des forures de ces ailes de profilé (13.4) et sont vissées dans les logements filetés (28) des boulons de liaison (27).

6. Armoire de distribution suivant la revendication 5,
caractérisée
en ce que des ailes de profilé des branches d'encadrement (11, 13) orientées parallèlement auxdites ailes de profilé (13.4) et qui en sont distantes présentent des passages en alignement (13.3).

7. Armoire de distribution suivant l'une quelconque des revendications de 1 à 6,
caractérisée
en ce que les coudes (35.3, 35.4) prévues sur les arêtes verticales des parois de protection (35) pour les parois latérales (30) sont reliés à des ailes de profilé (13.4; 14.4) des branches d'encadrement (11, 12 ou 13, 14) correspondantes.

8. Armoire de distribution suivant la revendication 7,
caractérisée
en ce que les ailes de profilé (13.4; 14.4) sont orientées perpendiculairement aux parois latérales (30) et aux parois de protection (35).

9. Armoire de distribution suivant la revendication 7 ou la revendication 8,
caractérisée
en ce que les tronçons terminaux (35.4) des parois de protection (35) pour les parois latérales (30) sont introduits dans les espaces libres entre la paroi de protection (25) pour la paroi arrière (20) et l'ossature d'encadrement (10) et dans les logements de réception entre la paroi de porte extérieure (42) et l'ossature d'encadrement (10).

10. Armoire de distribution suivant l'une quelconque des revendications de 1 à 9,
caractérisée
en ce que la paroi de porte intérieure (40) s'appuie par un bord coudé (41) sur la face intérieure de la paroi de porte extérieure (42) et est relié à cette dernière, par exemple par soudage ou brasage.

11. Armoire de distribution suivant l'une quelconque des revendications de 1 à 9,
caractérisée
en ce que la paroi de porte intérieure (40) est à double
coude et est reliée par le tronçon terminal (45) à la face intérieure de la paroi de porte extérieure (42), et en ce que les tronçons terminaux (45) s'étendent jusqu'aux bords (43) de la paroi de porte extérieure (42).

12. Armoire de distribution suivant l'une quelconque des revendications de 1 à 11,
caractérisée
en ce que la paroi arrière (20) et la paroi de protection associée (25) constituent une unité de structure identique à celle de la porte d'armoire à paroi double constituée par la paroi intérieure et la paroi extérieure (40, 42).

13. Armoire de distribution suivant l'une quelconque des revendications de 1 à 12,
caractérisée
en ce que les parois de protection (25, 35) et la paroi de porte extérieure (42) sont dotées d'une couche de protection de surface additionnelle, tandis que l'ossature d'encadrement (10), la paroi arrière (30) et la paroi de porte intérieure (40) ont des surfaces à conductivité électrique, et dès lors ne sont pas dotées d'une couche de protection de surface additionnelle.

14. Armoire de distribution suivant l'une quelconque des revendications de 1 à 13,
caractérisée
en ce que la face inférieure de l'ossature d'encadrement (10) est reliée à un socle.

15. Armoire de distribution suivant l'une quelconque des revendications de 1 à 14,
caractérisée
en ce que sur sa face supérieure est fixé un boîtier supplémentaire, par exemple pour un appareil de climatisation, boîtier qui peut également être à double paroi.
